# EUROPÄISCHE PATENTANMELDUNG

(11) **EP 2 355 334 A2**
(43) Veröffentlichungstag der Anmeldung: **10.08.2011**
(21) Anmeldenummer: 11152745.3
(22) Anmeldetag: 31.01.2011
(51) Int. Cl.: H02P 7/29

(54) **Verfahren und Vorrichtung zur Regelung eines Elektromotors eines Modellbahnfahrzeuges**

(30) Priorität: 02.02.2010 DE 102010001515
(71) Anmelder: Gebrüder Märklin & Cie. Gesellschaft mit beschränkter Haftung, 73033 Göppingen (DE)
(72) Erfinder: Pudert, Jürgen, 73117, Wangen (DE); Lingens, Martin, 70599, Stuttgart (DE); Kiekopf, Andreas, 73066, Uhingen (DE)
(74) Vertreter: Hoeger, Stellrecht & Partner Patentanwälte

(57) **Zusammenfassung**

Die Erfindung betrifft ein Verfahren zur Regelung eines Elektromotors eines Modellbahnfahrzeuges, wobei man die Versorgungsspannung des Elektromotors in Abhängigkeit von der Motordrehzahl regelt. Um das Verfahren derart weiterzubilden, dass es einen vorbildgerechteren Betrieb des Modellbahnfahrzeuges ermöglicht, wird erfindungsgemäß vorgeschlagen, dass man alternativ oder ergänzend zur Motordrehzahl das vom Motor abgegebene Motordrehmoment zur Regelung heranzieht.

## Beschreibung

Die Erfindung betrifft ein Verfahren zur Regelung eines Elektromotors eines Modellbahnfahrzeuges, insbesondere eines Modelleisenbahnfahrzeuges, wobei man die Versorgungsspannung des Elektromotors in Abhängigkeit von der Motordrehzahl regelt.

Außerdem betrifft die Erfindung eine Regeleinrichtung zur Regelung eines Elektromotors eines Modellbahnfahrzeuges, insbesondere eines Modelleisenbahnfahrzeuges, vorzugsweise zur Durchführung des Verfahrens der voranstehend genannten Art.

Der Antrieb elektrischer Modellbahnfahrzeuge, insbesondere elektrischer Modelleisenbahnfahrzeuge, erfolgt häufig mittels fremderregter Gleichstrommotoren. Zur Regelung der Fahrgeschwindigkeit der Modellbahnfahrzeuge wird der Gleichstrommotor abwechselnd mit einer Versorgungsspannung verbunden und von dieser getrennt. Hierzu ist der vom Gleichstrommotor über eine elektrische Schalteinheit mit der Versorgungsspannung verbunden, die von einem Pulsgenerator gesteuert wird. Der Pulsgenerator stellt eine Pulsgröße mit regelbarem Puls-/Pausenverhältnis bereit. Die Einschalt- oder Ausschaltzeit mittels der einzelnen Pulse der Pulsfolge kann geregelt werden, und dadurch kann dem Gleichstrommotor eine durch die Stellung eines Fahrtenreglers vorbestimmte Energie zur Erzielung einer vorgegebenen Fahrgeschwindigkeit zugeführt werden.

Zur Regelung des Puls-/Pausenverhältnisses der Pulsfolge wird in der DE 101 05 207 A1 vorgeschlagen, die während der Unterbrechung der Versorgungsspannung am Gleichstrommotor anliegende Generatorspannung als Istwert zu erfassen und mittels eines Vergleichsgliedes mit einem vom Benutzer vorgegebenen Sollwert zu vergleichen. In Abhängigkeit von der Abweichung des Istwerts vom vorgenommenen Sollwert wird dem Pulsgenerator dann vom Vergleichsglied eine Regelgröße bereitgestellt, die das Puls-/Pausenverhältnis bestimmt. Ist der ermittelte Istwert kleiner als der vorgegebene Sollwert, so kann beispielsweise die Ausschaltzeit der Pulsfolge verringert werden, um den Motor mehr Energie zur Verfügung zu stellen.

Die während der Unterbrechung der Versorgungsspannung am Motor anliegende Generatorspannung ist von der Drehzahl abhängig. Je größer die Drehzahl ist, desto größer ist auch die Generatorspannung. Dies ermöglicht es, durch Erfassung der Generatorspannung die Motordrehzahl zu bestimmen.

Es sind auch Modellbahnfahrzeuge bekannt, die von einem geregelten Drehstrommotor angetrieben werden, wobei man ein Messsignal - beispielsweise das Messsignal einer Hall-Sonde - am Elektromotor abgreift, das dessen Motordrehzahl entspricht. Dieses Messsignal dient dann als Grundlage für eine Regelung des Elektromotors.

Die Regelung des Elektromotors in Abhängigkeit von dessen Motordrehzahl ermöglicht es dem Benutzer, eine bestimmte Fahrgeschwindigkeit einzustellen, die dann vom Modellbahnfahrzeug eingenommen wird. Die Fahrgeschwindigkeit wird vom Modellbahnfahrzeug unabhängig von einer eventuell auftretenden Steigung der Fahrbahn, also insbesondere einer Steigung des Gleises bei einer Modelleisenbahn, und auch unabhängig von einer möglichen Last, wie sie beim Bewegen von Modelleisenbahnwagons auf das Modelleisenbahnfahrzeug ausgeübt wird, beibehalten. Dies entspricht allerdings nicht in allen Fällen einem vorbildgerechten Verhalten des Modellbahnfahrzeugs. So kann es beispielsweise im Falle einer Modelleisenbahnlokomotive beim Ankuppeln eines Wagons, der am Ende eines Gleises vor einem Prellbock steht, zu einer erheblichen Erhöhung des Motordrehmoments des Elektromotors kommen, da die Lokomotive den Wagon beim Ankuppeln gegen den Prellbock drückt und dadurch stark abgebremst wird. Diese Abbremsung veranlasst die Motorregelung zu einer schlagartigen Erhöhung des Motordrehmoments. Dies kann dazu führen, dass der Wagon aus den Schienen gedrückt wird und hat darüber hinaus den Nachteil, dass die Räder der Lokomotive durchdrehen und dadurch die Haftreifen der Lokomotive beschädigt werden.

Aufgabe der vorliegenden Erfindung ist es daher, ein Verfahren der eingangs genannten Art sowie eine Regeleinrichtung der eingangs genannten Art bereitzustellen, die einen vorbildgerechteren Betrieb des Modellbahnfahrzeugs ermöglichen.

Bei einem Verfahren der gattungsgemäßen Art wird diese Aufgabe erfindungsgemäß dadurch gelöst, dass man alternativ oder ergänzend zur Motordrehzahl das vom Motor abgegebene Motordrehmoment zur Regelung heranzieht.

In die Erfindung fließt der Gedanke mit ein, dass ein vorbildgerechteres Verhalten des Modellbahnfahrzeugs dadurch erzielt werden kann, dass man zur Regelung des Elektromotors nicht nur die Motordrehzahl sondern auch das Motordrehmoment als Eingangsgröße heranzieht.

Beispielsweise kann der Benutzer ein maximales Motordrehmoment vorgeben, das dann unabhängig von der Motordrehzahl nicht überschritten werden darf. Dies kann dazu führen, dass eine gewünschte Fahrgeschwindigkeit des Modellbahnfahrzeugs bei größerer Last nur allmählich erreicht wird.

Wie bereits erläutert, kann bei fremderregten Gleichstrommotoren zur Regelung der Motordrehzahl die während der Unterbrechung der Versorgungsspannung am Gleichstrommotor anliegende Generatorspannung herangezogen werden. Die erfasste Generatorspannung stellt ein mit der Motordrehzahl korreliertes Messsignal dar und kann mittels eines Vergleichsgliedes mit einer vom Benutzer vorgegebenen Spannung verglichen werden.

Es kann vorgesehen sein, dass man den über den Elektromotor fließenden Motorstrom erfasst und daraus das vom Elektromotor abgegebene Motordrehmoment bestimmt. Dadurch kann entsprechend dem Vorbild des Modellbahnfahrzeugs zur Regelung des Elektromotors ein konkreter Sollwert des Motordrehmoments vorgegeben und mit dem Istwert des Motordrehmoments verglichen werden.

Zur Bestimmung des Motordrehmoments aus dem Motorstrom kann vorteilhafterweise auch die ermittelte Motordrehzahl herangezogen werden, denn in vielen Fällen ist das Motordrehmoment nicht nur vom Motorstrom abhängig sondern auch von der Motordrehzahl.

Der Zusammenhang zwischen Motordrehzahl, Motorstrom und Motordrehmoment kann beispielsweise in Form eines Rechenalgorithmus vorgebbar sein. Es kann auch vorgesehen sein, dass man in einer vom Hersteller des Modellbahnfahrzeugs vorgegebenen Tabelle verschiedene Motordrehmomente in Abhängigkeit von Motordrehzahlen und Motorstromwerten hinterlegt. Ein aktuelles Motordrehmoment kann dann der Tabelle entnommen werden in Abhängigkeit vom aktuellen Motorstrom und der aktuellen Motordrehzahl.

Bei einer vorteilhaften Ausführungsform des erfindungsgemäßen Verfahrens bestimmt man aus dem Motordrehmoment und der Motordrehzahl die Motorleistung. Dies gibt dem Benutzer die Möglichkeit, zur Regelung des Elektromotors einen Istwert der Motorleistung mit einem vorgegebenen Sollwert zu vergleichen. Man kann zur Erzielung eines möglichst vorbildgerechten Verhaltens des Modellbahnfahrzeugs auch eine maximale Motorleistung vorgeben, die dann insbesondere bei einer Steigung oder beim Überwinden einer Zug- oder Drucklast die maximale Fahrgeschwindigkeit des Modellbahnfahrzeugs begrenzt.

Besonders günstig ist es, wenn man die Versorgungsspannung des Elektromotors wahlweise in Abhängigkeit von der Motordrehzahl, dem Motordrehmoment und/oder der Motorleistung regelt. Eine derartige Ausgestaltung des erfindungsgemäßen Verfahrens hat den Vorteil, dass der Benutzer oder Hersteller des Modellbahnfahrzeuges die Motorregelung konfigurieren kann, indem er vorgibt, ob zur Regelung des Elektromotors die Drehzahl, das Motordrehmoment, die Motorleistung oder eine Kombination dieser Größen herangezogen wird.

Es kann auch vorgesehen sein, dass dem Elektromotor in einer vom Benutzer auswählbaren Betriebsart eine ungeregelte Versorgungsspannung bereit gestellt wird. Der Benutzer kann dann zusätzlich auch einen ungeregelten Betrieb auswählen.

Günstigerweise gibt man Sollwerte der Motordrehzahl, des Motordrehmoments und/oder der Motorleistung vor und vergleicht diese Sollwerte mit entsprechenden Istwerten, wobei man zur Bestimmung einer Regelgröße die Abweichungen der Istwerte von den Sollwerten gewichtet. Die Regelgröße kann beispielsweise eine Abweichung des Istwerts der Motordrehzahl von einem entsprechenden Sollwert nur zu 50 % berücksichtigen und ansonsten eine gleich bleibende Versorgungsspannung anstreben. Dies hat zur Folge, dass bei einer Abweichung des Istwertes der Motordrehzahl vom vorgegebenen Sollwert sich der Istwert nur allmählich dem Sollwert annähert.

Die Regelgröße kann man beispielsweise einem Pulsgenerator bereitstellen, der basierend auf der Regelgröße eine Pulsfolge mit regelbarem Puls-/Pausenverhältnis bereitstellt. Mittels der Pulsfolge kann eine Schalteinheit gesteuert werden, die in eine Versorgungsleitung geschaltet ist, über die der Elektromotor mit einer Spannungsquelle in Verbindung steht.

Die Regelgröße, die auch als Korrekturfaktor bezeichnet werden kann, kann eine Gewichtung unterschiedlicher Sollwert-Istwertabweichungen darstellen.

Besonders günstig ist es, wenn der Benutzer des Modellbahnfahrzeugs die Gewichtung der Regelgröße selbst vornehmen kann. Dies erweitert die Spielvariationen, die mit dem Modellbahnfahrzeug möglich sind.

In Ergänzung zur Regelung des Elektromotors in Abhängigkeit von der Motordrehzahl, dem Motordrehmoment und/oder der Motorleistung ist bei einer vorteilhaften Ausführungsform des erfindungsgemäßen Verfahrens vorgesehen, dass man das Reibungsverhalten des Modellbahnfahrzeugs durch Vorgabe einer Reibungskonstante berücksichtigt. Günstigerweise ist die Reibungskonstante herstellerseitig oder durch den Benutzer einstellbar. Die Reibungskonstante kann insbesondere bei einer Abbremsung des Modellbahnfahrzeugs, das heißt bei einer Verringerung von dessen Fahrgeschwindigkeit und damit dessen Motordrehzahl, in die Regelung des Elektromotors einfließen. Durch die Vorgabe einer Reibungskonstante kann berücksichtigt werden, dass eine Abbremsung des Vorbildes des Modellbahnfahrzeugs aufgrund der vorherrschenden Reibungsverhältnisse nur allmählich erfolgen kann. Hierzu kann die Reibungskonstante in die Bestimmung der beispielsweise einem Pulsgenerator bereitstellbaren Regelgröße einfließen.

Es kann auch vorgesehen sein, dass man die Motordrehzahl des Elektromotors dadurch verringert, dass man den Elektromotor kurzzeitig mit einer Gegenspannung beaufschlagt, die einer Fahrtrichtungsumkehr entspricht, oder dass man den Elektromotor kurzzeitig kurzschließt.

Wie eingangs erwähnt, betrifft die Erfindung auch eine Regeleinrichtung, bei der die Versorgungsspannung in Abhängigkeit von der Motordrehzahl regelbar ist. Bei einer derartigen Regeleinrichtung wird die voranstehend genannte Aufgabe erfindungsgemäß dadurch gelöst, dass die Versorgungsspannung des Elektromotors in Abhängigkeit von dem vom Motor abgegebenen Motordrehmoment regelbar ist alternativ und/oder ergänzend zur Regelung in Abhängigkeit von der Motordrehzahl.

Die Regeleinrichtung ermöglicht es dem Benutzer somit, den Elektromotor des Modellfahrzeuges nicht nur in Abhängigkeit von dessen Motordrehzahl zu regeln sondern auch in Abhängigkeit von dessen abgegebenem Motordrehmoment. Dies ermöglicht einen vorbildgerechteren Betrieb des Modellfahrzeuges.

Besonders vorteilhaft ist es, wenn die Versorgungsspannung des Elektromotors alternativ oder ergänzend auch in Abhängigkeit von der Motorleistung regelbar ist. Bei einer derartigen Ausgestaltung der Regeleinrichtung kann der Benutzer beispielsweise eine maximale Motorleistung vorgeben, die vom Elektromotor nicht überschritten werden darf.

Bevorzugt ist die Versorgungsspannung wahlweise in Abhängigkeit von der Motordrehzahl, dem Motordrehmoment und/oder der Motorleistung regelbar.

Günstigerweise umfasst die Regeleinrichtung mehrere Betriebsarten, die sich in der Art der Regelung des Elektromotors unterscheiden. Hierbei kann eine erste Betriebsart vorgesehen sein mit einer ungeregelten Steuerung des Elektromotors mit vorgegebener Versorgungsspannung. In einer zweiten Betriebsart kann beispielsweise die Regelung des Elektromotors allein in Abhängigkeit von der Motordrehzahl erfolgen. In einer dritten Betriebsart kann eine Regelung des Elektromotors in Abhängigkeit von der Motordrehzahl erfolgen, jedoch unter Berücksichtigung eines maximalen Motordrehmoments, bei dessen Überschreiten die Motordrehzahl selbsttätig reduziert wird. In einer vierten Betriebsart kann eine Regelung des Elektromotors in Abhängigkeit von der Motordrehzahl erfolgen unter Berücksichtigung einer vorgebbaren maximalen Motorleistung.

In einer Betriebsart der Regeleinrichtung, die von besonderem Vorteil ist, ist herstellerseitig oder vom Benutzer des Modellbahnfahrzeuges eine Regelgröße generierbar, in die wahlweise und mit vorgebbarer Gewichtung die Motordrehzahl, das Motordrehmoment und/oder die Motorleistung sowie eine ungeregelte Steuerung des Elektromotors mit vorgebbarer Versorgungsspannung einfließen. Die Regelgröße kann beispielsweise aus einer gewichteten Summe der jeweiligen Sollwert-Istwert-Abweichungen der Motordrehzahl, des Motordrehmoments und/oder der Motorleistung unter Berücksichtigung eines herstellerseitigen oder vom Benutzer des Modellbahnfahrzeuges vorgegebenen Anteils einer ungeregelten Steuerung des Elektromotors mit vorgebbarer Versorgungsspannung gebildet werden.

Bevorzugt umfasst die Regeleinrichtung ein Vergleichsglied, dem ein Pulsgenerator nachgeordnet ist, der eine Pulsfolge mit regelbarem Puls-/Pausenverhältnis bereitstellt zur Steuerung der Versorgungsspannung des Elektromotors, wobei dem Pulsgenerator vom Vergleichsglied eine Regelgröße bereitstellbar ist, die abhängig ist vom Vergleich eines vorgegebenen Sollwerts der Motordrehzahl mit einem ermittelten Istwert der Motordrehzahl und vom Vergleich eines vorgegebenen Sollwerts des Motordrehmoments mit einem ermittelten Istwert des Motordrehmoments.

Von Vorteil ist es, wenn die Regeleinrichtung ein Bestimmungsglied aufweist, mit dessen Hilfe aus einem mit der Motordrehzahl korrelierten ersten Messsignal ein Istwert der Motordrehzahl und aus einem mit dem Motordrehmoment korrelierten zweiten Messsignal ein Istwert des Motordrehmoments bestimmbar sind. Insbesondere kann das Motordrehmoment basierend auf dem zweiten Messsignal unter Berücksichtigung des Istwerts der Motordrehzahl bestimmbar sein.

Als erstes Messsignal, das mit der Motordrehzahl korreliert ist, kann beispielsweise die voranstehend genannte Generatorspannung herangezogen werden, sofern der Elektromotor als fremderregter Gleichstrommotor ausgestaltet ist.

Als zweites Messsignal, das mit dem Drehmoment korreliert ist, kann beispielsweise der über den Elektromotor fließende Motorstrom herangezogen werden.

Günstigerweise ist mittels des Bestimmungsliedes aus den Istwerten der Motordrehzahl und des Motordrehmoments ein Istwert der Motorleistung bestimmbar, der vom Vergleichsglied mit einem vorgegebenen Sollwert der Motorleistung vergleichbar ist, wobei in Abhängigkeit vom Vergleich des Sollwerts mit dem Istwert der Motorleistung einem Pulsgenerator der Regeleinrichtung eine Regelgröße bereitstellbar ist.

Wie bereits erläutert, ist bei einer besonders bevorzugten Ausgestaltung der erfindungsgemäßen Regeleinrichtung vorgesehen, dass der Regeleinrichtung Gewichtungsfaktoren für eine Gewichtung der Abweichung der Istwerte der Motordrehzahl, des Motordrehmoments und/oder der Motorleistung von vorgegebenen Sollwerten vorgebbar ist zur Bestimmung der dem Pulsgenerator bereitstellbaren Regelgröße.

Die Regeleinrichtung kann in Form eines integrierten Schaltkreises, insbesondere in Form eines Mikrocontrollers ausgestaltet sein.

Von besonderem Vorteil ist es, wenn die Regeleinrichtung in einen Decoder zum Decodieren und Verarbeiten von Steuersignalen eines Steuergeräts einer Modellbahnanlage integriert ist. Mittels derartiger Decoder können Daten und Befehle eines Steuergeräts einer Modellbahnanlage über einen Kommunikationskanal empfangen werden. Die Kommunikation kann bei einer Modelleisenbahn über das Gleis erfolgen, das somit einem Elektromotor des Modellbahnfahrzeugs nicht nur die Versorgungsspannung bereitstellt sondern zusätzlich auch der Übertragung von Befehlen und Daten vom Steuergerät des Modellbahnfahrzeugs dient. Der Decoder kann die übertragenen Steuersignale des Steuergeräts decodieren und verarbeiten und kann die voranstehend genannte Regeleinrichtung umfassen, mit deren Hilfe der Elektromotor geregelt werden kann.

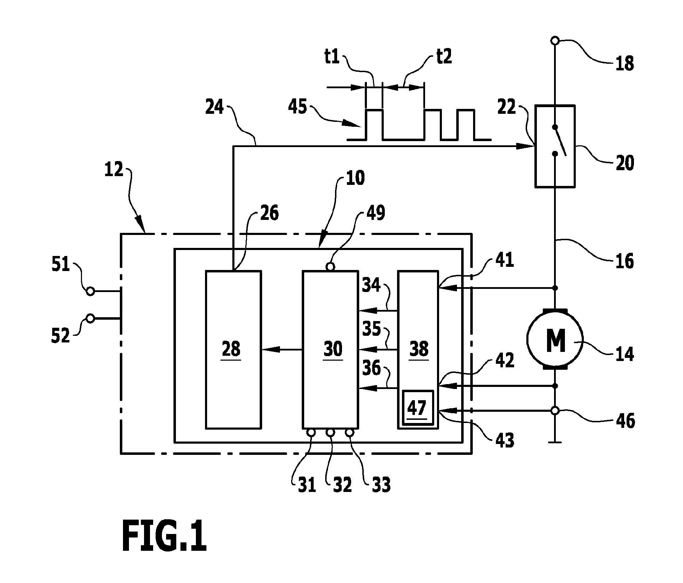

Die nachfolgende Beschreibung einer bevorzugten Ausführungsform der Erfindung dient im Zusammenhang mit der Zeichnung der näheren Erläuterung.

Die einzige Figur der Zeichnung zeigt schematisch ein Blockschaltbild einer erfindungsgemäßen Regeleinrichtung zur Regelung eines Elektromotors, der im vorliegenden Ausführungsbeispiel als fremderregter Gleichstrommotor ausgestaltet ist. Die Regeleinrichtung ist in der Zeichnung mit dem Bezugszeichen 10 belegt und in einen strichpunktiert dargestellten Decoder 12 eines Modellbahnfahrzeugs integriert. Das an sich bekannte und deshalb in der Zeichnung nicht dargestellte Modellbahnfahrzeug umfasst den fremderregten Gleichstrommotor 14, der über eine Versorgungsleitung 16 mit einer Spannungsquelle 18 verbunden ist. Im Falle eines Modelleisenbahnfahrzeugs, insbesondere einer Modelleisenbahnlokomotive, kann die Spannungsquelle 18 vom Gleis der Modelleisenbahnanlage ausgebildet werden, das an eine Versorgungsspannung angeschlossen ist.

In die Versorgungsleitung 16 ist eine elektrisch steuerbare Schalteinheit 20 geschaltet. Hierbei kann es sich beispielsweise um einen Schalttransistor handeln. Die Schalteinheit 20 weist einen Steuereingang 22 auf, der über eine Steuerleitung 24 mit dem Ausgang 26 eines Pulsgenerators 28 der Regeleinheit 10 verbunden ist.

Der Pulsgenerator 28 ist eingangsseitig mit einem Vergleichsglied 30 der Regeleinrichtung 10 verbunden. Über Sollwerteingänge 31, 32 und 33 können dem Vergleichsglied 30 nachstehend erläuterte Sollwerte eingegeben werden. Über eine erste, eine zweite und eine dritte Verbindungsleitung 34, 35, 36 stellt das Vergleichsglied 30 eingangsseitig mit einem Bestimmungsglied 38 der Regeleinrichtung 10 in elektrischer Verbindung.

Das Bestimmungsglied 38 weist einen ersten Spannungseingang 41, einen zweiten Spannungseingang 42 sowie einen Stromeingang 43 auf.

Während des Betriebs der Regeleinrichtung 10 wird vom Pulsgenerator 28 eine Pulsfolge 45 bereitgestellt mit fest vorgegebener Einschaltzeit t1 und variabler Ausschaltzeit t2. Während der Einschaltzeit t1 der Pulsfolge 45 nimmt die elektrische Schalteinheit 20 ihren Schließzustand ein, in der dem Gleichstrommotor 14 von der Spannungsquelle 18 über die Versorgungsleitung 16 eine Versorgungsspannung bereitgestellt wird. Während der Ausschaltzeit t2 nimmt die elektrische Schalteinheit 20 ihre Offenstellung ein, in dem die Versorgungsspannung für den Gleichstrommotor 14 unterbrochen ist. Die Dauer der Ausschaltzeit t2 und damit das Puls-/Pausenverhältnis der Pulsfolge 45 kann von der Regeleinrichtung 10 geregelt werden. Hierzu kann über die beiden Spannungseingänge 41, 42 die während der Unterbrechung der Versorgungsspannung am Gleichstrommotor 14 anliegende Generatorspannung erfasst werden. Die Generatorspannung stellt ein Messsignal dar, das mit der Motordrehzahl korreliert ist. Je größer die Motordrehzahl, desto größer auch die Generatorspannung. Außerdem kann über den Stromeingang 43 und einen mit der Versorgungsleitung 16 gekoppelten Stromwandler 46 der während der Bereitstellung der Versorgungsspannung über den Gleichstrommotor 14 flie-βende Motorstrom erfasst werden. Der Motorstrom stellt ein Messsignal dar, das mit dem Motordrehmoment korreliert ist. Mit Hilfe des Bestimmungsglieds 38 kann aus der Generatorspannung die tatsächliche Motordrehzahl ermittelt werden. Ein entsprechender Istwert wird vom Bestimmungsglied 38 über die erste Verbindungsleitung 34 an das Vergleichsglied 30 übertragen. Aus dem über den Stromeingang 43 bereitgestellten Motorstrom kann mittels des Bestimmungsgliedes 38 unter Berücksichtigung der bereits ermittelten Motordrehzahl das vom Motor abgegebene Motordrehmoment bestimmt werden. Das Bestimmungsglied 38 weist hierzu ein Speicherglied 47 auf, in dem herstellerstellerseitig eine Tabelle hinterlegt ist mit Werten des Motordrehmoments bei verschiedenen Motordrehzahlen und Motorströmen. Dies ermöglicht es, aus einer aktuellen Motordrehzahl und einem aktuellen Motorstrom das vom Gleichstrommotor 14 aktuell abgegebene Motordrehmoment zu bestimmen.

Alternativ kann vorgesehen sein, dass das Motordrehmoment vom Bestimmungsglied 38 anhand eines vorgegebenen Rechenalgorithmuses aus der aktuellen Motordrehzahl und dem aktuellen Motorstrom bestimmt wird.

Das aktuelle Motordrehmoment wird vom Bestimmungsglied 38 über die zweite Verbindungsleitung 35 an das Vergleichsglied 30 übermittelt.

Aus den aktuellen Werten der Motordrehzahl und des Motordrehmoments bestimmt das Bestimmungsglied 38 die aktuelle Motorleistung, die vom Gleichstrommotor 14 abgegeben wird. Die aktuelle Motorleistung wird vom Bestimmungsglied 38 über die dritte Verbindungsleitung 36 an das Vergleichsglied 30 übertragen.

Über die Sollwerteingänge 31, 32 und 33 kann der Benutzer dem Vergleichsglied 30 Sollwerte der Motordrehzahl, des Motordrehmoments und der Motorleistung vorgeben. Diese Sollwerte werden vom Vergleichsglied 30 mit dem vom Bestimmungsglied 38 bereitgestellten Istwerten verglichen. Das Vergleichsglied 30 ermittelt aus einer gewichteten Summe der Abweichungen der Istwerte von den jeweiligen Sollwerten eine Regelgröße, die an den Pulsgenerator 28 übertragen wird, der in Abhängigkeit von der Regelgröße die Pulsfolge 45 generiert. Die Pulsfolge 45 wird dann an die Schalteinheit 20 übertragen, die in Abhängigkeit von der Pulsfolge dem Gleichstrommotor 14 während der Einschaltzeit t1 die Versorgungsspannung bereitstellt und diese während der Ausschaltzeit t2 unterbricht.

Die Regelung des Gleichstrommotors 14 erfolgt somit nicht allein unter Berücksichtigung der Abweichung der aktuellen Motordrehzahl vom vorgegebenen Sollwert sondern auch unter Berücksichtigung der Soll- und Istwerte des Motordrehmoments und der Motorleistung. Der Benutzer kann über den Sollwerteingang 31 einen Sollwert der Motordrehzahl eingeben. Hierzu kann ein Steuergerät zum Einsatz kommen mit einem Fahrtenregler, dessen aktuelle Stellung einem bestimmten Sollwert der Motordrehzahl entspricht. Über den Sollwerteingang 32 kann der Benutzer dem Vergleichsglied 30 ein maximales Motordrehmoment vorgeben. Wird dieses Motordrehmoment überschritten, so kann das Vergleichsglied 30 die dem Pulsgenerator 28 bereitgestellte Regelgröße dahingehend verändern, dass die tatsächliche Motordrehzahl reduziert wird. Der Benutzer kann außerdem über den Sollwerteingang 33 eine maximale Motorleistung vorgeben. Überschreitet die aktuelle Motorleistung die vorgegebene Maximalleistung, so kann das Vergleichsglied 30 die dem Pulsgenerator 28 bereitgestellte Regelgröße ebenfalls dahingehend beeinflussen, dass die Motordrehzahl reduziert wird.

Zusätzlich zu einer Regelung der Pulsfolge 45 in Abhängigkeit von einem Sollwert-Istwert-Vergleich des Vergleichsgliedes 30 kann mittels der Regeleinrichtung 10 auch eine ungeregelte Steuerung des Gleichstrommotors 14 vorgenommen werden, indem der Pulsgenerator 28 eine gleich bleibende Pulsfolge 45 mit fest vorgegebenem Puls-/Pausenverhältnis erzeugt.

Die Steuerung des Gleichstrommotors 14 ist mittels der Regeleinrichtung 10 herstellerseitig oder auch vom Benutzer konfigurierbar, indem der Hersteller oder Benutzer die Gewichtung der Sollwert-Istwert-Abweichungen der Motordrehzahl, des Motordrehmoments und der Motorleistung bei der Bildung der Regelgröße für den Pulsgenerator 28 vorgeben kann. Geeignete Gewichtungsfaktoren können dem Vergleichsglied 30 über einen Steuereingang 49 eingegeben werden.

Die Eingabe der Sollwerte der Motordrehzahl, des Motordrehmoments und der Motorleistung sowie auch die Eingabe der Gewichtungsfaktoren für die Abweichung der jeweiligen Istwerte von den vorgegebenen Sollwerten zur Bildung der Regelgröße für den Pulsgenerator 28 kann über Kommunikationsanschlüsse 51 und 52 des Decoders 12 erfolgen, in dem die Regeleinrichtung 10 integriert ist. Die Regeleinrichtung 10 und der Decoder 12 können insbesondere in Form eines gemeinsamen Mikrocontrollers ausgestaltet sein, der die Kommunikationsanschlüsse 51 und 52 sowie die beiden Spannungseingänge 41, 42 und den Stromeingang 43 aufweist.

## Patentansprüche

1. Verfahren zur Regelung eines Elektromotors eines Modellbahnfahrzeuges, wobei man die Versorgungsspannung des Elektromotors in Abhängigkeit von der Motordrehzahl regelt, **dadurch gekennzeichnet, dass** man alternativ oder ergänzend zur Motordrehzahl das vom Motor abgegebene Motordrehmoment zur Regelung heranzieht.

2. Verfahren nach Anspruch 1, **dadurch gekennzeichnet, dass** man als Elektromotor einen fremderregten Gleichstrommotor verwendet, den man über eine steuerbare elektrische Schalteinheit abwechselnd während einer Schließzeit der Schalteinheit mit einer Spannungsquelle verbindet und während einer Öffnungszeit der Schalteinheit von der Spannungsquelle trennt, wobei man die während der Öffnungszeit der Schalteinheit am Gleichstrommotor anliegende Generatorspannung erfasst und aus der erfassten Generatorspannung die Motordrehzahl bestimmt.

3. Verfahren nach Anspruch 1 oder 2, **dadurch gekennzeichnet, dass** man den über den Motor fließenden Motorstrom erfasst und aus dem erfassten Motorstrom das vom Elektromotor abgegebene Motordrehmoment bestimmt.

4. Verfahren nach Anspruch 3, **dadurch gekennzeichnet, dass** man aus dem Motordrehmoment und der Motordrehzahl die Motorleistung bestimmt.

5. Verfahren nach Anspruch 4, **dadurch gekennzeichnet, dass** man die Versorgungsspannung des Elektromotors wahlweise in Abhängigkeit von der Motordrehzahl, dem Motordrehmoment und/oder der Motorleistung regelt.

6. Verfahren nach Anspruch 5, **dadurch gekennzeichnet, dass** man Sollwerte der Motordrehzahl, des Motordrehmoments und/oder der Motorleistung vorgibt und mit Istwerten der Motordrehzahl, des Motordrehmoments und der Motorleistung vergleicht, wobei man zur Bestimmung einer Regelgröße die Abweichungen der Istwerte von den Sollwerten gewichtet.

7. Verfahren nach einem der voranstehenden Ansprüche, **dadurch gekennzeichnet, dass** man bei der Regelung der Versorgungsspannung in Abhängigkeit vom Motordrehmoment oder von der Motorleistung das Reibungsverhalten des Modellbahnfahrzeugs durch Vorgabe einer Reibungskonstante berücksichtigt.

8. Verfahren nach einem der voranstehenden Ansprüche, **dadurch gekennzeichnet, dass** man die Motordrehzahl des Elektromotors durch Beaufschlagen des Elektromotors mit einer Gegenspannung, die einer Fahrtrichtungsumkehr entspricht, oder durch Kurzschließen des Elektromotors verringert.

9. Regeleinrichtung zur Regelung eines Elektromotors eines Modellfahrzeuges, insbesondere zur Durchführung des Verfahrens nach einem der voranstehenden Ansprüche, wobei die Versorgungsspannung des Elektromotors in Abhängigkeit von dessen Motordrehzahl regelbar ist, **dadurch gekennzeichnet, dass** die Versorgungsspannung des Elektromotors in Abhängigkeit von dem vom Motor abgegebenen Motordrehmoment regelbar ist alternativ oder ergänzend zur Regelung in Abhängigkeit von der Motordrehzahl.

10. Regeleinrichtung nach Anspruch 9, **dadurch gekennzeichnet dass** die Versorgungsspannung alternativ oder ergänzend in Abhängigkeit von der Motorleistung regelbar ist.

11. Regeleinrichtung nach Anspruch 10, **dadurch gekennzeichnet, dass** die Versorgungsspannung wahlweise in Abhängigkeit von der Motordrehzahl, dem Motordrehmoment und/oder der Motorleistung regelbar ist.

12. Regeleinrichtung nach Anspruch 9, 10 oder 11, **dadurch gekennzeichnet, dass** die Regeleinrichtung ein Vergleichsglied (30) aufweist, dem ein eine Pulsfolge mit regelbarem Puls-/Pausenverhältnis bereitstellender Pulsgenerator (28) nachgeordnet ist zur Steuerung der Versorgungsspannung für den Elektromotor, wobei dem Pulsgenerator (28) vom Vergleichsglied (30) eine Regelgröße bereitstellbar ist, die abhängig ist vom Vergleich eines vorgegebenen Sollwerts der Motordrehzahl mit einem ermittelten Istwert der Motordrehzahl und vom Vergleich eines vorgegebenen Sollwerts des Motordrehmoments mit einem ermittelten Istwert des Motordrehmoments.

13. Regeleinrichtung nach Anspruch 12, **dadurch gekennzeichnet, dass** die Regeleinrichtung (10) ein Bestimmungsglied (38) aufweist, wobei mittels des Bestimmungsglieds (38) aus einem mit der Motordrehzahl korrelierten ersten Messsignal ein Istwert der Motordrehzahl und aus einem mit dem Motordrehmoment korrelierten zweiten Messsignal, insbesondere unter Berücksichtigung des Istwerts der Motordrehzahl, ein Istwert des Motordrehmoments bestimmbar sind.

14. Regeleinrichtung nach Anspruch 13, **dadurch gekennzeichnet, dass** mittels des Bestimmungsgliedes (38) aus den Istwerten der Motordrehzahl und des Motordrehmoments ein Istwert der Motorleistung bestimmbar ist, der vom Vergleichsglied (30) mit einem vorgegebenen Sollwert der Motorleistung vergleichbar ist, wobei in Abhängigkeit vom Vergleich des Sollwertes mit dem Istwert der Motorleistung dem Pulsgenerator (28) der Regeleinrichtung eine Regelgröße bereitstellbar ist.

15. Regeleinrichtung nach einem der Ansprüche 12 bis 14, **dadurch gekennzeichnet, dass** der Regeleinrichtung Gewichtungsfaktoren für eine Gewichtung der Abweichung der Istwerte der Motordrehzahl, des Motordrehmoments und/oder der Motorleistung von vorgegebenen Sollwerten vorgebbar sind zur Bestimmung der dem Pulsgenerator (28) bereitstellbaren Regelgröße.
